# EUROPÄISCHE PATENTANMELDUNG

(11) **EP 1 270 284 A1**
(43) Veröffentlichungstag der Anmeldung: **02.01.2003**
(21) Anmeldenummer: 01115801.1
(22) Anmeldetag: 28.06.2001
(51) Int. Cl.: B60G 13/00, F16F 9/54, F16F 1/38

(54) **Dämpferlager**

(71) Anmelder: EMS-Chemie AG, 7013 Domat/Ems (CH)
(72) Erfinder: Jeltsch, Thomas, 7013 Domat/Ems (CH)
(74) Vertreter: OK pat AG

(57) **Zusammenfassung**

Die Erfindung betrifft ein Dämpferlager (1) zur Aufnahme zumindest eines Teils (7) eines Dämpfers für Schwingungen, Stösse bzw. Schläge, die bei der Verwendung von Maschinen - insbesondere Fahrzeugen bzw. Gewerbe-, Industrie- oder Haushaltmaschinen - auf Tragvorrichtungen dieser Maschinen einwirken, wobei das Dämpferlager (1) einen Dämpfertopf (2) mit Elementen (3) zur Befestigung dieses Dämpfertopfes an diesen Tragvorrichtungen und einen Elastomerkörper (6) umfasst und wobei dieser Elastomerkörper (6) nach der Montage des Dämpferlagers auf dem Dämpfer von diesem Dämpferteil (7) ganz durchstossen ist. Das erfindungsgemässe Dämpferlager (1) ist dadurch gekennzeichnet, dass der Dämpfertopf (2) einstückig aus Kunststoff ausgebildet ist und eine nach innen gerichtete Rippe (5) zur Aufnahme eines einzigen, einstückig ausgebildeten Elastomerkörpers (6) aufweist, welcher diese Rippe (5) umfasst. Dabei bilden Dämpfertopf und Elastomerkörper eine Einheit und der Elastomerkörper ist unverlierbar im Dämpfertopf angeordnet.

## Beschreibung

Die Erfindung betrifft ein Dämpferlager zur Aufnahme zumindest eines Teils eines Dämpfers für Schwingungen, Stösse bzw. Schläge, die bei der Verwendung von Maschinen - insbesondere Fahrzeugen bzw. Industrie- oder Haushaltmaschinen - auf Tragvorrichtungen dieser Maschinen einwirken, wobei das Dämpferlager einen Dämpfertopf mit Elementen zur Befestigung dieses Dämpfertopfes an diesen Tragvorrichtungen und einen Elastomerkörper umfasst und wobei dieser Elastomerkörper nach der Montage des Dämpferlagers auf dem Dämpfer von diesem Dämpferteil ganz durchstossen ist.

Der Einsatz von Dämpferlagern ist z.B. aus der Autoindustrie etwa im Zusammenhang mit der Aufhängung des Motorenblocks oder mit der Stossdämpferbefestigung an der Karosserie bekannt. Mehr oder weniger komplexe Systeme zur Stossdämpferbefestigung bei Automobilen sind z.B. aus DE 35 01 106, DE 37 41 465, DE 39 02 269 und DE 43 36 034 bekannt.

DE 35 01 106 und DE 39 02 269 offenbaren eine MacPherson-Aufhängung, welche durch eine um den Stossdämpfer herum angeordnete Schraubenfeder gekennzeichnet ist. Diese Dämpferlager sind für sehr hohe Kräfte ausgelegt, weil sie nicht nur die gedämpften Stösse der Räder aufnehmen, sondern auch einen Teil des Gewichtes des Fahrzeuges tragen müssen. Die vorliegende Erfindung betrifft keine Dämpferlager für solche MacPherson-Federbeine.

US 5,456,454 offenbart ein gattungsgemässes Dämpferlager zur Aufnahme eines Endes der Kolbenstange eines Teleskopstossdämpfers und zu dessen Befestigung an einem Rahmenteil eines Automobils. Für jedes Rad ist neben diesem Stossdämpfer eine separate Schraubenfeder zwischen Hinterachse und Karosserieboden angeordnet, welche das Gewicht des Fahrzeuges trägt. Dieses Stossdämpferlager umfasst einen doppelten Dämpfertopf, welcher auf beiden Seiten eines Tragteils befestigt ist. In jeden Teil des Dämpfertopfes ist ein Elastomerkörper eingesetzt. Diese Elastomerkörper werden bei der Montage des Dämpfers von dieser Kolbenstange ganz durchstossen und über spezielle Unterlagsscheiben - die einen Flansch an der Kolbenstange beaufschlagen bzw. die durch Schrauben am Ende der Kolbenstange beaufschlagt werden - etwas zusammengepresst. Das mit der Karosserie verbundene Stützteil, das zwischen die Elastomerkörper eingreift, besteht aus Metall.

Auch in Maschinen für Gewerbe und Industrie (wie z.B. Kompressoren, Rütteltische, Transformatoren) oder in Haushaltmaschinen (wie z.B. Waschmaschinen, Wäscheschleudern) welche selbst Schwingungen erzeugen, oder welche gegen in der Umwelt auftretende Schwingungen geschützt werden sollen (wie z.B. Laborautomaten und Waagen) ist der Einsatz von Schwingungsdämpfern bekannt.

Die Aufgabe der vorliegenden Erfindung besteht darin, ein alternatives, einfaches und kostengünstiges Dämpferlager für Stoss- und Schwingungsdämpfer für Fahrzeuge bzw. Gewerbe-, Industrie- oder Haushaltmaschinen vorzuschlagen.

Diese Aufgabe wird durch die Merkmale des unabhängigen Anspruches 1 erfüllt, indem ein Dämpferlager zur Aufnahme zumindest eines Teils eines Dämpfers für Schwingungen, Stösse bzw. Schläge, die bei der Verwendung von Maschinen - insbesondere Fahrzeugen bzw. Gewerbe-, Industrie- oder Haushaltmaschinen - auf Tragvorrichtungen dieser Maschinen einwirken, vorgeschlagen wird. Dabei umfasst das Dämpferlager einen Dämpfertopf mit Elementen zur Befestigung dieses Dämpfertopfes an diesen Tragvorrichtungen und einen Elastomerkörper, welcher - nach der Montage des Dämpferlagers auf dem Dämpfer - von diesem Dämpferteil ganz durchstossen ist. Das erfindungsgemässe Dämpferlager ist dadurch gekennzeichnet, dass der Dämpfertopf einstückig aus Kunststoff ausgebildet ist und eine nach innen gerichtete Rippe zur Aufnahme eines einzigen, einstückig ausgebildeten Elastomerkörpers aufweist, welcher diese Rippe umfasst. Bevorzugte Ausführungsformen und zusätzliche Merkmale ergeben sich aus den abhängigen Ansprüchen.

Zu den Vorteilen des erfindungsgemässen Dämpferlagers gegenüber dem Stand der Technik zählen:
- Das Dämpferlager kann aus chemisch hochresistenten, im Gegensatz zu Metallteilen korrosionsfreien und leichten Kunststoffen hergestellt werden.
- Das Dämpferlager kann in zwei aufeinander folgenden Schritten im Spritzgussverfahren einfach, in grossen Stückzahlen und mit geringsten, verfahrensbedingten Toleranzen hergestellt werden.
- Das komplette Dämpferlager, bestehend aus Dämpfertopf und Elastomerkörper, kann einfach als ein Stück bestellt und geliefert bzw. als Ersatzteil platzsparend gelagert werden.
- Das Dämpferlager lässt sich als ein Bauteil einfach einbauen und - z.B. während einer Reparatur in Folge eines Unfalls - auch einfach austauschen.
- Der Dämpfertopf mit Rippe und Befestigungselementen aus Kunststoff bietet (im Vergleich zu einer Ausführung aus Metall) besonders günstige Schalldämpfungseigenschaften und verringert dadurch unerwünschte Rumpelgeräusche deutlich.

Bevorzugte Varianten des erfindungsgemässen Dämpferlagers werden an Hand von schematischen Zeichnungen erläutert, ohne dass dieselben den Umfang der Erfindung einschränken sollen. Dabei zeigen:
- Fig. 1: einen vertikalen Schnitt durch ein Dämpferlager, gemäss einer ersten Ausführungsform;
- Fig. 2: einen vertikalen Schnitt durch ein Dämpferlager, gemäss einer zweiten Ausführungsform;
- Fig. 3: die Vergrösserung eines Details bei der unteren Lagerscheibe, entsprechend dem Kreis in Fig. 1;
- Fig. 4: einen vertikalen Schnitt durch ein Dämpferlager, gemäss einer dritten Ausführungsform;
- Fig. 5: die Draufsicht auf einen Dämpfertopf mit zwei Befestigungsflügeln;
- Fig. 6: die Draufsicht auf einen Dämpfertopf mit drei Befestigungsflügeln;
- Fig. 7: einen vertikalen Schnitt durch ein Dämpferlager, gemäss einer vierten Ausführungsform.

In den Figuren sind gleiche Teile mit den gleichen Bezugszeichen versehen, dabei gelten die entsprechenden Bezeichnungen, auch wenn sie nicht in jedem Fall ausdrücklich aufgeführt sind. Beliebige Kombinationen der gezeigten bzw. beschriebenen Merkmale sind Bestandteil der vorliegenden Erfindung.

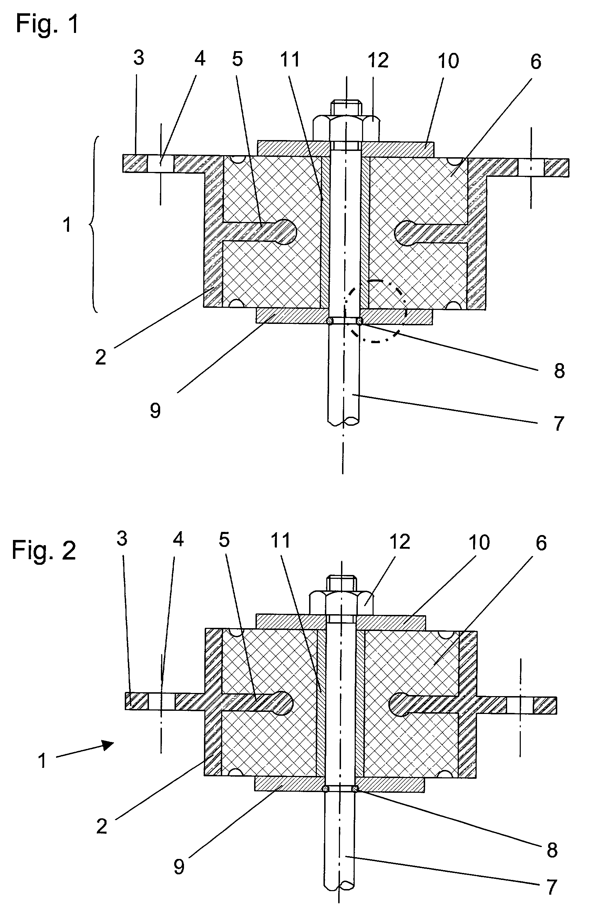

Wie in Figur 1 schematisch dargestellt, besteht das eigentliche Dämpferlager 1 aus dem Dämpfertopf 2 und dem Elastomerkörper 6. Der Dämpfertopf 2 weist einerseits Elemente zur Befestigung an Tragvorrichtungen der Maschine auf, bevorzugt in Form von Befestigungsflügeln 3 mit Schraubenlöchern 4. Andererseits weist der Dämpfertopf 2 einen Vorsprung nach innen in Form einer Rippe 5 auf, die bevorzugt ununterbrochen rundherum verläuft. Diese Rippe 5 wird umfasst vom Elastomerkörper 6, so dass Dämpfertopf 2 und Elastomerkörper 6 eine Einheit bilden und der Elastomerkörper unverlierbar im Dämpfertopf angeordnet ist.

Bei der Montage des Dämpferlagers 1 auf die Dämpferstange 7 des Dämpfers, die nachher den innen hohlen Elastomerkörper durchstösst, wird wie folgt vorgegangen:

Das Dämpferlager 1 wird mit einer Abstandshülse 11, der unteren Lagerscheibe 9 und der oberen Lagerscheibe 10 auf die Dämpferstange 7 aufgesteckt. Die untere Lagerscheibe 9 stützt sich nach unten gegen einen Nutring 8 ab und die obere Lagerscheibe 10 wird von oben durch eine Mutter 12 gehalten. Das Dämpferlager 1 ist über die Abstandshülse 11 auf der Dämpferstange 7 zentriert und über die beiden Lagerscheiben 9 und 10 in axialer Richtung der Dämpferachse fest eingespannt. Die Bezeichnungen "unten" bzw. "oben" beziehen sich auf die vorliegenden Figuren und könnten - z.B. bei einer Überkopfmontage des Dämpfers und/oder Dämpferlagers - sinngemäss vertauscht werden. Die Abstandshülse 11 ist geringfügig kürzer als die axiale Ausdehnung des Elastomerkörpers 6 und erlaubt es, den Elastomerkörper etwas vorzuspannen und die Mutter fest anzuziehen.

Mit der Figur 2 soll deutlich gemacht werden, dass die Befestigungsflügel 3 an unterschiedlichen Positionen des Dämpfertopfs 2 sitzen können. Hier sind die Rippe 5 und die Befestigungsflügel 3 ungefähr in der Mitte der Höhe des Dämpfertopfs 2 angeordnet. Dagegen greifen in der vorhergehende Figur 1 die Befestigungsflügel 3 im Bereich des oberen Endes des Dämpfertopfs 2 und damit in ihrer Position gegenüber der Rippe 5 versetzt an. Die für den konkreten Fall bestgeeignete Position richtet sich jeweils nach den Einbauverhältnissen in der Maschine bzw. der Anordnung der Tragvorrichtungen derselben und kann von den gezeigten Beispielen abweichen.

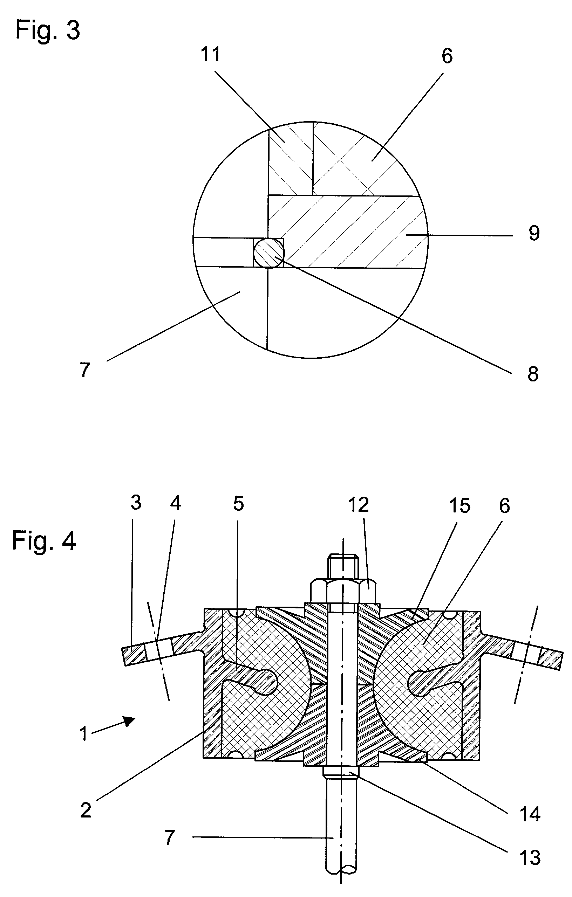

Figur 3 ist eine Detailansicht aus Figur 1, bei der vergrössert dargestellt wird, wie sich die untere Lagerscheibe 9 gegen den Nutring 8 abstützt (vergrösserter, in Fig. 1 eingekreister Ausschnitt).

Gemäss weiteren Ausführungsformen ist es auch möglich, die Abstandshülse 11 mit den Lagerscheiben zu kombinieren, so dass die Abstandshülse kein separates Teil mehr darstellt, sondern z.B. mit einer der beiden Lagerscheiben fest verbunden ist.

In Figur 4 ist eine dritte Ausführungsform des erfindungsgemässen Dämpferlagers dargestellt, bei dem die Abstandshülse zweigeteilt und je zur Hälfte an beide Lagerscheiben angeformt ist. Mit anderen Worten: In Fig. 4 sind die untere und obere Lagerscheibe und die Abstandshülse aus Fig. 1 durch ein unteres und oberes Zentrierlager 14 bzw. 15 ersetzt. In Fig. 4 ist zudem dargestellt, dass sich das untere Zentrierlager 14 (bzw. die untere Lagerscheibe 9) auf einem Absatz 13 auf der Dämpferstange 7 abstützt. Neben dem gezeigten Nutring 8 sind viele weiteren Ausführungsmöglichkeiten für einen solchen Absatz denkbar. So kann der Absatz z.B. durch eine Art Flansch (entsprechend Detail 13 in Fig. 4), durch einen angeschweissten Ring oder durch eine Durchmesserreduktion der Dämpferstange 7 im Bereich des Dämpferlagers verwirklicht sein.

Figur 4 zeigt ausserdem, dass die Befestigungsflügel 3 gegenüber dem Dämpfertopf 2 - entsprechend den Einbauverhältnissen in der Maschine bzw. der Anordnung der Tragvorrichtungen - auch schräg und/oder verdreht bzw. geschwungen ausgerichtet sein können. Überdies kann auch die Rippe 5 geneigt und gegenüber den Befestigungsflügeln 3 beliebig versetzt sein.

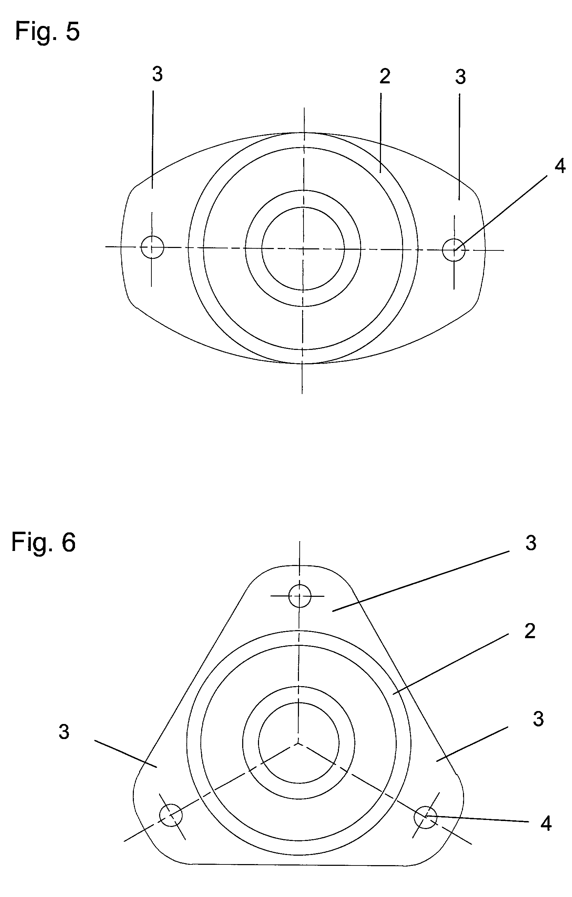

Die Figuren 5 und 6 mit der Ansicht auf zwei Dämpfertöpfe von oben zeigen zwei mögliche Varianten in der Anzahl und Gestalt der Befestigungsflügel 3. Der Dämpfertopf von Fig. 5 weist zwei gegenüberliegende Befestigungsflügel 3 auf, während beim Dämpfertopf von Fig. 6 drei Befestigungsflügel 3 gleichmässig verteilt angeordnet sind. In der Regel weist jeder Befestigungsflügel 3 ein Schraubenloch 4 auf; es ist aber auch möglich, auf einem Befestigungsflügel 3 z.B. zwei Schraubenlöcher 4 anzuordnen.

Das erfindungsgemässe Dämpferlager 1 lässt sich auf wirtschaftliche Weise mittels Spritzgusstechnik herstellen, und zwar als Zweikomponenten- (2K-) Kunststoff-Verbundspritzgussteil. Bei diesem Zweikomponentenspritzgiessen wird in einem zweistufigen Prozess in einer ersten Werkzeugform zunächst der Dämpfertopf 2 aus thermoplastischem Kunststoff gespritzt. Der Dämpfertopf 2 wird dann in eine zweite Werkzeugform eingelegt, deren Kavität noch zusätzliches Volumen für den Elastomerkörper aufweist, so dass das entsprechende Elastomermaterial innen an den Dämpfertopf angespritzt werden kann, was das fertige Dämpferlager 1 als eine Einheit ergibt. Durch die Geometrie mit der Rippe 5 ist der Elastomerkörper 6 unverlierbar im Dämpfertopf 2 angeordnet. Bei bevorzugten Varianten aus miteinander verträglichen Polymeren bildet sich bei der Herstellung zwischen dem Dämpfertopf 2 und dem Elastomerkörper 6 überdies eine Verbundhaftung aus.

Als thermoplastischer Kunststoff für den Dämpfertopf 2 werden mit Vorteil glasfaserverstärkte Polymere verwendet, damit die Kriechneigung unter Spannung minimiert ist. Gut geeignete Polymere sind Polyamide oder Copolyamide mit einem Schmelzpunkt von mindestens 220 °C, wie zum Beispiel Polyamid 6, Polyamid 66 und Polyamid 46. Besonders gut geeignet für die erfindungsgemässe Anwendung bei hohen Belastungen sind aber partiell aromatische, teilkristalline Copolyamide mit einem Schmelzpunkt im Bereich von 300 bis 350 °C. Ein Beispiel dafür ist Grivory® HTV-5H1. Dieser thermoplastische Konstruktionswerkstoff stammt von der EMS-CHEMIE AG, CH-7013 Domat/Ems (Schweiz). Es handelt sich dabei um ein mit 50 Gewichts-% Glasfasern (bezogen auf das totale Gewicht) verstärktes PA 6T/6I mit Schmelzpunkt 325 °C, also ein partiell aromatisches, teilkristallines Copolyamid aus den Monomerkomponenten Hexamethylendiamin, Terephthalsäure und Isophthalsäure. Grivory® HTV-5H1 eignet sich speziell zur Herstellung äusserst steifer, fester, wärmebeständiger, massgenauer Spritzgussteile und zeichnet sich überdies durch sehr gute Chemikalienbeständigkeit aus.

Die beiden Zentrierlager 14 bzw. 15 müssen nicht aus Metall hergestellt sein (vgl. Fig. 4), sondern es bietet sich an, diese beiden Teile (ebenso wie den Dämpfertopf 2) auf wirtschaftliche Art durch Spritzgiessen aus thermoplastischem Kunststoff herzustellen. Bevorzugt sind dazu die gleichen glasfaserverstärkten Polymere wie für den Dämpfertopf, insbesondere Grivory® HTV-5H1.

Als Kunststoff für den Elastomerkörper 6 sind thermoplastische Elastomere bevorzugt. Besonders bevorzugt ist dabei thermoplastisches Polyurethan. Die thermoplastischen Elastomere haben den Vorteil, dass sie mit normaler Spritzgusstechnik verarbeitet werden können (so wie die thermoplastischen Kunststoffe für den Dämpfertopf auch).

Eine alternative Variante zur Herstellung des Elastomerkörpers 6 besteht in der Verwendung von Polymeren, die in der Spritzgussform (oder unter Umständen anschliessend, z.B. durch Temperung und/oder Luftfeuchtigkeit) vernetzen. Hierzu kommen die verschiedensten Gummisorten (vor allem synthetische Kautschuke), insbesondere aber Polyurethan in Frage. Sowohl diese vernetzten Elastomere als auch die vorher erwähnten thermoplastischen Elastomere können geschäumt sein.

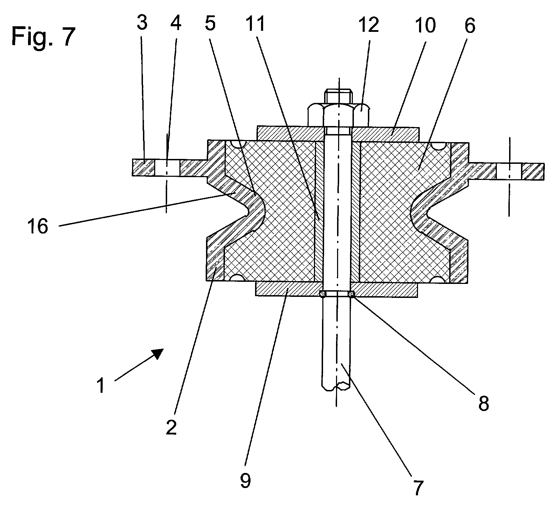

In Figur 7 ist noch eine weitere Variante des Dämpfertopfs dargestellt, bei welcher die Rippe 5 durch eine V-förmige Ausprägung, d.h. durch eine rundum verlaufende Einbuchtung 16 der Dämpfertopfwand, gebildet wird. Die Aussenseite dieser Einbuchtung kann durch im Wesentlichen axial verlaufende Rippen verstärkt sein.

## Patentansprüche

1. Dämpferlager (1) zur Aufnahme zumindest eines Teils (7) eines Dämpfers für Schwingungen, Stösse bzw. Schläge, die bei der Verwendung von Maschinen - insbesondere Fahrzeugen bzw. Gewerbe-, Industrie- oder Haushaltmaschinen - auf Tragvorrichtungen dieser Maschinen einwirken, wobei das Dämpferlager (1) einen Dämpfertopf (2) mit Elementen (3) zur Befestigung dieses Dämpfertopfes an diesen Tragvorrichtungen und einen Elastomerkörper (6) umfasst und wobei dieser Elastomerkörper (6) nach der Montage des Dämpferlagers auf dem Dämpfer von diesem Dämpferteil (7) ganz durchstossen ist, **dadurch gekennzeichnet, dass** der Dämpfertopf (2) einstückig aus Kunststoff ausgebildet ist und eine nach innen gerichtete Rippe (5) zur Aufnahme eines einzigen, einstückig ausgebildeten Elastomerkörpers (6) aufweist, welcher diese Rippe (5) umfasst.

2. Dämpferlager nach Anspruch 1, **dadurch gekennzeichnet, dass** es ein Zweikomponenten-Kunststoff-Verbundspritzgussteil ist, bei dem in einem zweistufigen Spritzgussverfahren zunächst der Dämpfertopf (2) aus einem thermoplastischen Kunststoff gespritzt und anschliessend der Elastomerkörper (6) aus einem elastomeren Kunststoff innen an den Dämpfertopf angespritzt worden ist.

3. Dämpferlager nach Anspruch 2, **dadurch gekennzeichnet, dass** der thermoplastische Kunststoff des Dämpfertopfs (2) ein glasfaserverstärktes Polymer ist.

4. Dämpferlager nach Anspruch 3, **dadurch gekennzeichnet, dass** das Polymer ausgewählt ist aus der Gruppe der Polyamide und Copolyamide und einen Schmelzpunkt von mindestens 220 °C besitzt.

5. Dämpferlager nach Anspruch 4, **dadurch gekennzeichnet**, es sich beim Polymer um ein partiell aromatisches, teilkristallines Copolyamid mit einem Schmelzpunkt im Bereich von 300 bis 350 °C handelt.

6. Dämpferlager nach Anspruch 2, **dadurch gekennzeichnet, dass** der elastomere Kunststoff des Elastomerkörpers (6) ein thermoplastisches Elastomer ist.

7. Dämpferlager nach Anspruch 6, **dadurch gekennzeichnet, dass** das thermoplastische Elastomer ein thermoplastisches Polyurethan ist.

8. Dämpferlager nach Anspruch 2, **dadurch gekennzeichnet, dass** der elastomere Kunststoff des Elastomerkörpers (6) ein vernetztes Elastomer ist.

9. Dämpferlager nach Anspruch 8, **dadurch gekennzeichnet, dass** es sich beim vernetzten Elastomer um Gummi oder Polyurethan handelt.

10. Dämpferlager nach einem der Ansprüche 6 bis 9, **dadurch gekennzeichnet, dass** das Elastomer geschäumt ist.

11. Dämpferlager nach einem oder mehreren der vorhergehenden Ansprüche, **dadurch gekennzeichnet, dass** zwischen dem Dämpfertopf (2) und dem Elastomerkörper (6) eine Verbundhaftung besteht.

12. Dämpferlager nach einem oder mehreren der vorhergehenden Ansprüche, **dadurch gekennzeichnet, dass** die Elemente (3) zur Befestigung des Dämpfertopfs (2) an den Tragvorrichtungen der Maschine mindestens zwei Befestigungsflügel (3) mit je mindestens einem Schraubenloch umfassen.

13. Dämpferlager nach einem oder mehreren der vorhergehenden Ansprüche, **dadurch gekennzeichnet, dass** die Rippe (5) und die Befestigungsflügel (3) ungefähr in der Mitte der Höhe des Dämpfertopfs (2) angeordnet sind.

14. Dämpferlager nach einem oder mehreren der vorhergehenden Ansprüche, **dadurch gekennzeichnet, dass** es zudem eine Befestigungseinheit mit einer unteren Lagerscheibe (9), einer oberen Lagerscheibe (10), einer Abstandshülse (11), einer Mutter (12) und einem Nutring (8) umfasst; wobei der Nutring (8) zur Erzeugung eines Absatzes (13) auf dem Dämpferteil (7) und zur Stützung der unteren Lagerscheibe (9) ausgebildet ist.

15. Dämpferlager nach Anspruch 14, **dadurch gekennzeichnet, dass** die untere Lagerscheibe (9), die obere Lagerscheibe (10) und die Abstandshülse (11) der Befestigungseinheit durch ein unteres bzw. oberes Zentrierlager (14) bzw. (15) gebildet sind.

16. Dämpferlager nach Anspruch 15, **dadurch gekennzeichnet, dass** das untere und obere Zentrierlager (14,15) aus thermoplastischem Kunststoff spritzgegossen sind.

17. Dämpferlager nach einem oder mehreren der vorhergehenden Ansprüche, **dadurch gekennzeichnet, dass** die Rippe (5) des Dämpfertopfs (2) durch eine rundum verlaufende Einbuchtung (16) der Wand des Dämpfertopfs gebildet ist.

18. Dämpferlager nach einem oder mehreren der vorhergehenden Ansprüche, **dadurch gekennzeichnet, dass** es als Stossdämpferlager für ein Fahrzeug oder als Dämpferlager für eine Gewerbe-, Industrie oder Haushaltmaschine ausgebildet ist.

19. Fahrzeug bzw. Industrie- oder Haushaltmaschine mit einem oder mehreren Dämpferlagern (1) nach einem oder mehreren der vorhergehenden Ansprüche.

20. Verwendung eines Dämpferlagers (1) nach einem oder mehreren der vorhergehenden Ansprüche 1 bis 18 zum Einbau in ein Fahrzeug bzw. eine Gewerbe-, Industrie- oder Haushaltmaschine.
